# EUROPÄISCHE PATENTSCHRIFT

(11) **EP 1 189 096 B1**
(45) Veröffentlichungstag und Bekanntmachung des Hinweises auf die Patenterteilung: **15.10.2003**
(21) Anmeldenummer: 01000465.3
(22) Anmeldetag: 14.09.2001
(51) Int. Cl.: G02F 1/1335, G02F 1/1362

(54) **Flüssigkristall-Lichtmodulator**
Liquid crystal light modulator
Modulateur optique à cristaux liquides

(30) Priorität: 18.09.2000 DE 10046411
(43) Veröffentlichungstag der Anmeldung: 20.03.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Liebscher, Gerhard, c/o Philips Corp.Int.Prop.GmbH, 52064, Aachen (DE)
(74) Vertreter: Volmer, Georg, Dipl.-Ing.

(56) Entgegenhaltungen:
- EP-A- 0 763 765
- EP-A- 0 768 561
- EP-A- 0 811 868
- DE-A- 19 714 510
- US-A- 6 115 090

## Beschreibung

Die Erfindung betrifft eine Projektionseinrichtung mit einem Flüssglcristall-Lichtmodulator, einen Flüssigkristall-Lichtmodulator sowie ein Verfahren zur Herstellung eines Flüssigkristall-Lichtmodulators.

Reflektive Flüssigkristallanzeigen benötigen keine Hintergrundbeleuchtung als Lichtquelle, da sie so aufgebaut sind, dass äußeres einfallendes Licht innerhalb der Flüssigkristallanzeige reflektiert wird und so als Lichtquelle für den Bildschirm dient. Zur Reflexion des Lichtes weist eine reflektive Flüssigkristallanzeige reflektierende Elektroden auf. In Projektionseinrichtungen werden Flüssigkristallanzeigen als Lichtmodulatoren eingesetzt.

Ein Flüssigkristall-Lichtmodulator weist eine dünne Schicht aus Flüssigkristallmaterial zwischen einer Deckplatte und einer Bodenplatte auf. Die Deckplatte besteht üblicherweise aus einem Glassubstrat, welches eine große Elektrode auf einer an das Flüssigkristallmaterial angrenzenden Oberfläche aufweist. Die Bodenplatte besteht üblicherweise aus einem Siliciumsubstrat, welches an die reflektierende Elektroden auf einer an das eingeschlossene Flüssigkristallmaterial angrenzenden Oberfläche ankoppelt.

Die reflektierenden Elektroden bilden eine Matrixanordnung aus Pixelelektroden und sind jeweils an einen Dünnschichttransistoren gekoppelt. Mit den Dünnschichttransistoren verbundene Treiberschaltungen schalten die Dünnschichttransistoren ein und aus Eine an eine Pixelelektrode über den Dünnschichttransistor angelegte Spannung variiert die Richtung der Orientierung des Flüssigkristallmaterials an der Pixelelektrode und die Polarisationsebene des durch den Flüssigkristall tretende Lichtes wird moduliert. Wenn keine Spannung an die Pixelelektrode angelegt wird, bleibt das durch den Lichtmodulator tretende Licht entweder unverändert, wenn die Zellen schraubenförmiges nematisches Flüssigkristallmaterial enthalten, oder es wird gestreut, wenn die Zellen polymerdispergiertes Flüssigkristallmaterial enthalten.

Da ein Flüssigkristall-Lichtmodulator einer intensiven Lichtbestrahlung ausgesetzt ist, müssen die elektrischen Schaltungen auf dem Siliciumsubstrat vor diesem Licht geschützt werden, um lichtinduzierte Ströme zu vermeiden. Ein wichtiger Bestandteil eines effektiven Flüssigkristall-Lichtmodulators ist deshalb eine lichtreflektierende Schicht. Üblicherweise enthält die lichtreflektierende Schicht eine Metallschicht und ist zwischen Pixelelektroden und Transistoren aufgebracht. Zur Herstellung eines elektrischen Kontakts zwischen einer Pixelelektrode und einem Transistor wird ein Kontaktloch durch die lichtreflektierende Schicht geschaffen.

Aus der EP 0763765 A1 ist ein Flüssigkristall-Lichtmodulator bekannt. Zur elektrischen Isolation der Pixelelektroden und der lichtreflektierenden Schicht aus Metall ist in diesem Flüssigkristall-Lichtmodulator zwischen der Pixelelektrode und der lichtreflektierenden Schicht eine isolierende Schicht aufgebracht. Die isolierende Schicht ist derart strukturiert, dass sie die Bereiche eines Kontaktlochs, die in der lichtreflektierenden Schicht liegen, umhüllt. Da die Schichtdicke der isolierenden Schicht einige Mikrometer beträgt, entsteht um jedes Kontaktloch ein Bereich von einigen Mikrometern, an dem die lichtreflektierende Schicht unterbrochen ist. Licht, welches die Lücken zwischen den Pixelelektroden passiert, wird an der lichtreflektierenden Schicht und der Unterseite der Pixelelektroden reflektiert und gelangt durch eine solche Unterbrechung in der lichtreflektierenden Schicht zum Siliciumsubstrat.

Es ist deshalb eine Aufgabe der vorliegenden Erfindung, die Nachteile des Standes der Technik zu umgehen und eine Projektionseinrichtung mit einem verbesserten Flüssigkristall-Lichtmodulator bereitzustellen.

Diese Aufgabe wird gelöst, durch eine Projektionseinrichtung ausgerüstet mit einem Flüssigkristall-Lichtmodulator, der ein halbleitendes Substrat, auf dem Transistor-Arrays und Steuerungsschaltkreise aufgebracht sind, auf dem Substrat aufgebracht eine erste isolierende Schicht, eine lichtreflektierende Schicht, eine zweite isolierende Schicht, mindestens zwei Pixelelektroden, eine Flüssigkristallschicht, eine Deckelektrode und eine Frontplatte umfasst, wobei jede Pixelelektrode durch ein Kontaktloch, welches mit einem elektrisch leitenden Material gefüllt ist, mit einem Transistor verbunden ist und wobei die Wand des Kontaktlochs durchgehend mit einer dritten isolierenden Schicht bedeckt ist.

Es ist vorteilhaft, dass die dritte isolierende Schicht eine Schichtdicke zwischen 100 nm und 500 nm aufweist.

Durch Bedeckung der Wand eines Kontaktloches mit einer isolierenden Schicht, deren Schichtdicke maximal 500 nm beträgt, werden die Bereiche in denen die lichtreflektierende Schicht unterbrochen wird deutlich verkleinert. Die Wahrscheinlichkeit, dass Licht diese Bereiche passieren und auf das halbleitende Substrat gelangen kann, ist sehr geing bis nahezu unwahrscheinlich.

Es ist bevorzugt, dass die lichtreflektierende Schicht mindestens einen elektrischem Kontakt mit einem Transistor hat.

Über den Kontakt mit einem Transistor kann die elektrostatische Aufladung der lichtreflektierenden Schicht lokal abgeleitet werden.

Die Erfindung betrifft auch einen Flüssigkristall-Lichtmodulator, der ein halbleitendes Substrat, auf dem Transistor-Arrays und Steuerungsschaltkreise aufgebracht sind, auf dem Substrat aufgebracht eine erste isolierende Schicht, eine lichtreflektierende Schicht, eine zweite isolierende Schicht, mindestens zwei Pixelelektroden, eine Flüssigkristallschicht, eine Deckelektrode und eine Frontplatte umfasst, wobei jede Pixelelektrode durch ein Kontaktloch, welches mit einem elektrisch leitenden Material gefüllt ist, mit einem Transistor verbunden ist und wobei die Wand des Kontaktlochs durchgehend mit einer dritten isolierenden Schicht bedeckt ist.

Weiterhin betrifft die Erfindung ein Verfahren zur Herstellung eines Flüssigkristall-Lichtmodulators, der ein halbleitendes Substrat, auf dem Transistor-Arrays und Steuerungsschaltkreise aufgebracht sind, auf dem Substrat aufgebracht eine erste isolierende Schicht, eine lichtreflektierende Schicht, eine zweite isolierende Schicht, mindestens zwei Pixelelektroden, eine Flüssigkristallschicht, eine Deckelektrode und eine Frontplatte umfasst, wobei jede Pixelelektrode durch ein Kontaktloch, welches mit einem elektrisch leitenden Material gefüllt ist, mit einem Transistor verbunden ist, bei dem die Wand des Kontaktlochs durchgehend mit einer dritten isolierenden Schicht bedeckt wird.

Im Gegensatz zu der herkömmlichen Herstellungsmöglichkeit eines Kontaktloches, bei der ein Loch durch die erste und zweite isolierende Schicht sowie durch die lichtreflektierende Schicht geätzt wird, dieses Loch mit einem isolierenden Material gefüllt wird, ein zweites, kleineres Loch in das isolierende Material geätzt und das zweite, kleinere Loch mit einem elektrisch leitenden Material aufgefüllt wird, kann mit dem oben beschriebenen Verfahren eine Beschichtung der Wand des Kontaktloches erreicht werden, die deutlich kleinere Schichtdicken aufweist. Die weiten Toleranzen der beiden photolithografischen Ätzproaesee des herkömmlichen Herstellungsprozess führen dazu, dass die lichtreflektierender Schicht um jedes Kontaktloch beim Stand der Technik eine Unterbrechung von einigen µm aufweist. Bei dem erfindungsgemäßen Verfahren können dagegen Schichtdicken im nm-Bereich erzielt werden.

Es ist bevorzugt, dass die dritte isolierende Schicht auf die Wand des Kontaktloches aufgebracht wird, indem die dritte isolierende Schicht auf die zweite isolierende Schicht und auf die Wand sowie den Boden des Kontaktloches abgeschieden wird und die Bereiche der dritten isolierenden Schicht, welche sich auf der zweiten isolierenden Schicht und auf dem Boden des Kontaktloches befinden, weggeätzt werden, wobei die dritte isolierende Schicht an der Wand des Kontaktloches als Maske dient.

Ein weiterer Vorteil dieses Verfahrens ist, dass durch Verwendung der dritten isolierenden Schicht an der Wand eines Kontaktloches als natürliche Maske für den Ätzprozess das Verfahren vereinfacht wird. Es kann bevorzugt sein, dass vor Abscheidung der lichtreflektierenden Schicht wenigstens ein Transistor freigeätzt wird.

Vorteilhaft ist, dass der elektrische Kontakt durch einen einfachen Prozessschritt erreicht werden kann und das beliebig viele Transistoren, welche nicht zur Steuerung einer Pixelelektrode verwendet werden, mit der lichtreflektierenden Schicht verbunden werden können.
Im folgenden soll anhand von fünf Figuren und zwei Ausführungsbeispielen die Erfindung näher erläutert werden.
- Fig. 1 und Fig. 2 zeigen: jeweils den Aufbau eines erfindungsgemäßen Flüssigkristall-Lichtmodulators und
- Fig 3 bis Fig. 5 zeigen: die Herstellung eines Flüssigkristall-Lichtmodulators.

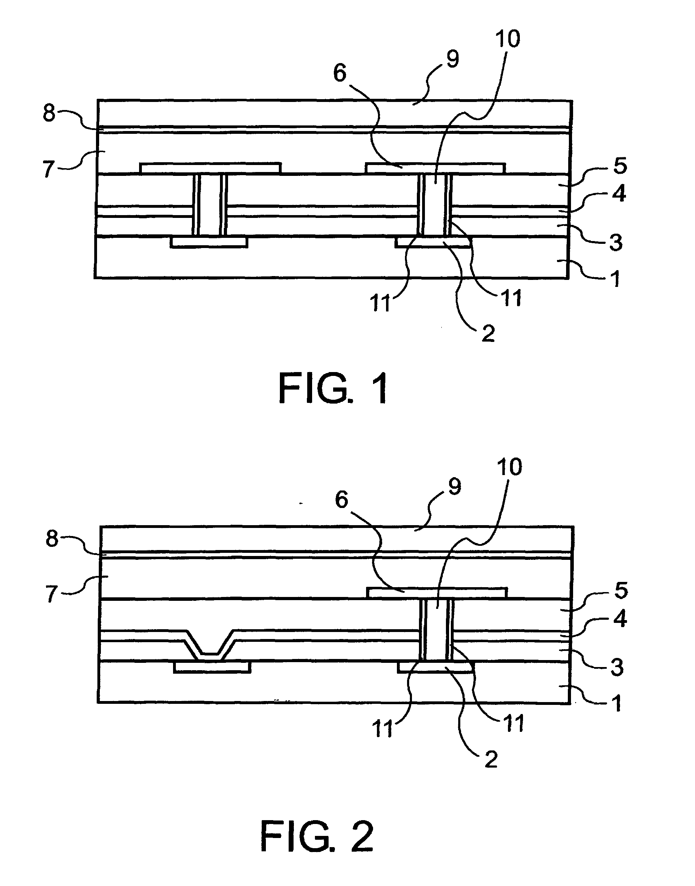

Gemäß Fig.1 weist ein Flüssigkristall-Lichtmodulator ein halbleitendes Substrat 1, welches bevorzugt p-dotiertes oder n-dotiertes Silicium ist, auf. Auf dem halbleitenden Substrat 1 sind neben den nicht dargestellten Steuerungsschaltkreisen Transistoren 2 aufgebracht, welche je nach halbleitenden Substrat 1 n-Kanal oder p-Kanal Transistoren sind. Die Transistoren 2 sind vorzugsweise Dünnschichttransistoren und weisen jeweils eine Source-, eine Gate- und eine Drain-Elektrode auf. Auf dem halbleitenden Substrat 1 ist eine erste isolierende Schicht 3 aufgebracht, welche beispielsweise SiO₂, Si₃N₄, Ta₂O₅, SiₓO_{y}N_{z} (0 ≤ x ≤ 1, 0 ≤ y ≤ 1, 0 ≤ z ≤ 1) enthält. Auf der ersten isolierenden Schicht 3 befindet sich eine lichtreflektierende Schicht 4, welche zum Beispiel Al, Ti, TiₓN_{y} (0 ≤ x ≤ 1, 0 ≤ y ≤ 1), W oder Mo enthält. Auf der lichtreflektierenden Schicht 4 ist eine zweite isolierende Schicht 5 aufgebracht und auf der zweiten isolierenden Schicht 5 befinden sich mindestens zwei Pixelelektroden 6. Die Pixelelektroden 6 reflektieren das einfallende Licht und enthalten beispielsweise Al, Al dotiert mit Si, Al dotiert mit Si und Cu, Al dotiert mit Cu, Al dotiert mit Ge oder Al dotiert mit Ge und Cu. Auf den Pixelelektroden 6 befindet sich eine Flüssigkristalleinheit 7, welche zum Beispiel TN(Twisted Nematic)-Flüssigkristallmoleküle, GH(Guest Host)-Flüssigkristallmoleküle oder PD(Polymer Dispersed)-Flüssigkristallmoleküle enthält.

Auf der Flüssigkristalleinheit 7 ist eine Frontplatte 9 aufgebracht, welche beispielsweise Glas oder einen durchsichtigen Kunststoff wie Polymethylmethacrylat enthält. Außerdem weist die Frontplatte 9 auf der der Flüssigkristalleinheit 7 zugewandten Seite eine Deckelektrode 8 aus einem transparenten elektrisch leitfähigen Material, wie zum Beispiel ITO, auf.

Jede Pixelelektrode 6 ist über ein Kontaktloch 10 mit einem Transistor 2 verbunden. Die Wand jedes Kontaktloches ist durchgehend mit einer dritten isolierenden Schicht 11 bedeckt und das Kontaktloch 10 ist mit einem elektrisch leitenden Material, wie zum Beispiel Al, gefüllt. Die Schichtdicke der dritten isolierenden Schicht 11 beträgt vorzugsweise zwischen 100 nm und 500 nm.

Als Materialien für die zweite isolierende Schicht 5 und die dritte isolierende Schicht 11 können beispielsweise SiO₂, Si₃N₄, Ta₂O₅, SiₓO_{y}N_{z} (0 ≤ x ≤ 1, 0 ≤ y ≤ 1, 0 ≤ z ≤ 1) verwendet werden.

In Fig 2 ist ein andere Ausführungsform eines erfindungsgemäßen Flüssigkristall-Lichtmodulators gezeigt. Der Aufbau und die bevorzugte Materialien sind analog zu dem Flüssigkristall-Lichtmodulator gemäß Fig. 1 mit der Ausnahme, dass die lichtreflektierende Schicht 4 an mindestens einer Stelle direkten, elektrischen Kontakt zu einem Transistor 2 hat.

Ein solcher Flüssigkristall-Lichtmodulator kann in beispielsweise in einer Projektionseinrichtung verwendet werden.

Eine mögliche Ausführungsform einer Farb-Projektionseinrichtung umfasst eine Lichtquelle, von der weißes Licht emittiert wird. Das Licht fällt auf ein Prisma, wo es durch dichroistische Filterbeschichtungen in seine roten, grünen und blauen Spektralanteile aufgeteilt wird. Das farbige Licht wird jeweils zu einem Flüssigkristall-Lichtmodulator gelenkt. Nach Reflexion an den Flüssigkristall-Lichtmodulatoren wandern die Lichtwellen zurück durch das Prisma und durch eine Projektionslinse. Die Projektionslinse vergrößert und projiziert das zusammengefügte Farbbild auf einem Projektionsschirm. Die Projektionseinrichtung weist durch den verbesserten Flüssigkristall-Lichtmodulator ein vabessertes Bild auf.

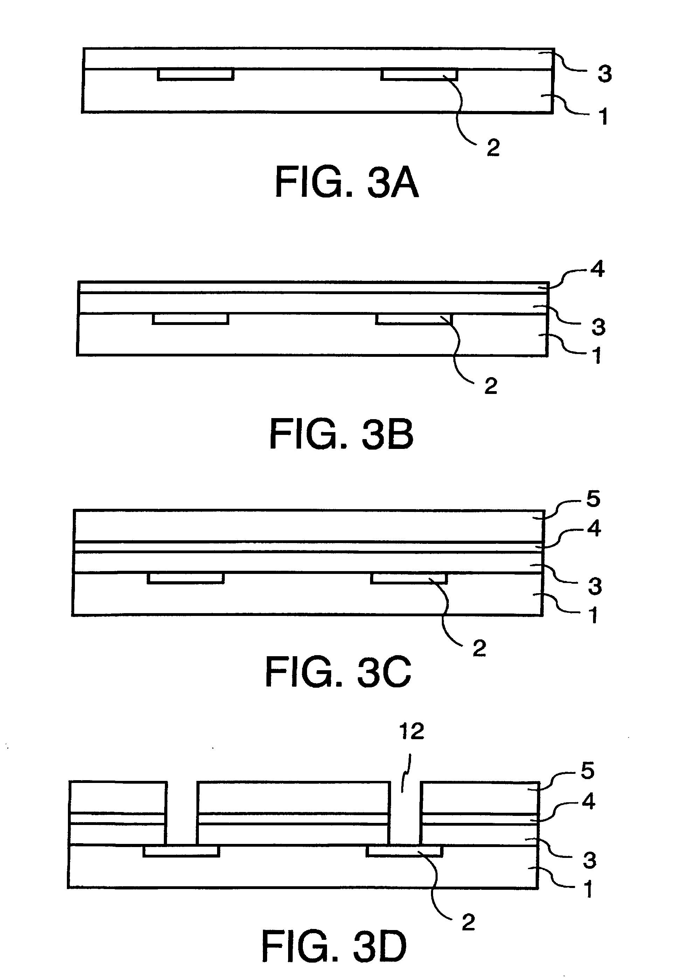

In Fig. 3 bis Fig. 5 ist die Herstellung eines Flüssigkristall-Lichtmodulators gezeigt. Gemäß Fig. 3A wird zunächst auf einem halbleitenden Substrat 1, auf welchem sich Transistor-Arrays und Steuerungsschaltkreise befinden, eine erste isolierende Schicht 3 aufgebracht. Auf die erste isolierende Schicht 3 wird eine lichtreflektierende Schicht 4 (Fig. 3B) und auf die lichtreflektierende Schicht 4 wird eine zweite isolierende Schicht 5 aufgebracht (Fig. 3C). Anschließend wird ein zylindrisches Loch 12 durch die zweite isolierende Schicht 5, die lichtreflektierende Schicht 4 und die erste isolierende Schicht 3 geschaffen und so ein Transistor 2 freigelegt (Fig. 3D). Das zylindrische Loch 12 kann mittels Sputterverfahren, Plasmaätzens, physikalisch-chemischer Trockenätzverfahren oder einer chemischen Ätzlösung erzeugt werden.

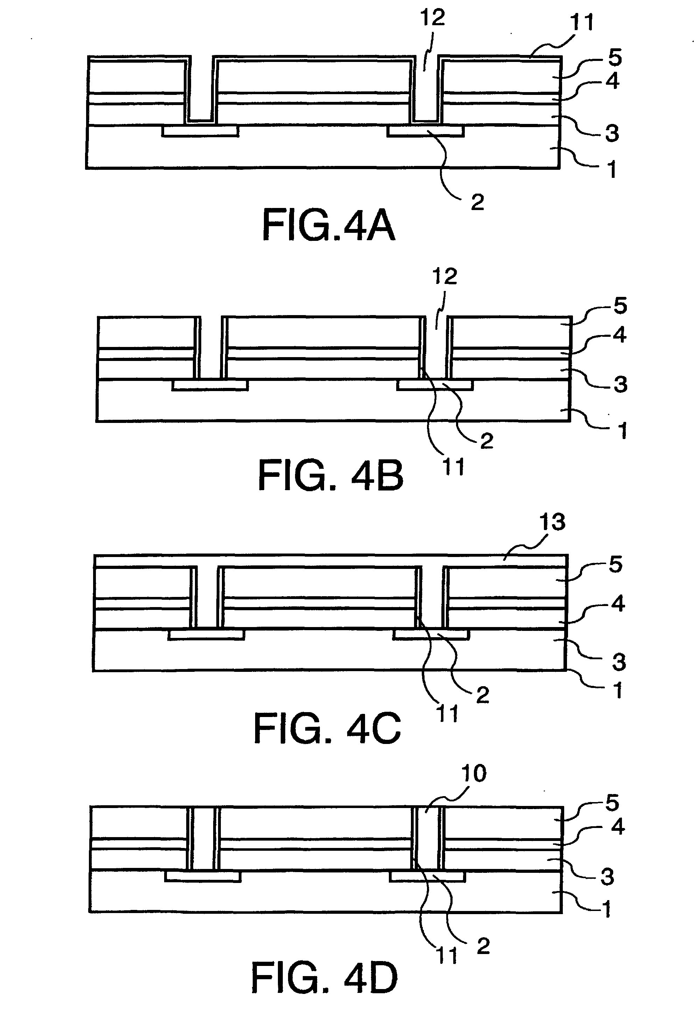

Im nächsten Schritt wird gemäß Fig. 4 A eine dünne dritte isolierende Schicht 11 auf die zweite isolierende Schicht 5 und auf die Wand sowie den Boden des zylindrischen Loches 12 abgeschieden. Mittels Ätzens werden die Bereiche der dritten isolierenden Schicht 11, welche auf der zweiten isolierenden Schicht 5 und auf dem Boden des zylindrischen Loches 12 sind, entfernt (Fig 4B). Die dritte isolierende Schicht 11 an der Wand des zylindrischen Loches 12 dient dabei als natürliche Maske für den Ätzprozess. Anschließend wird das zylindrische Loch 12 mit einem elektrisch leitenden Material, beispielsweise Al, gefüllt. Dazu wird die Schicht 13 aus dem elektrisch leitenden Material über die Fläche der zweiten isolierenden Schicht 5 und in das zylindrische Loch 12 abgeschieden (Fig. 4C). Anschließend wird das elektrisch leitende Material auf der zweiten isolierenden Schicht 5 entfernt und eine planare Oberfläche geschaffen (Fig 4D).

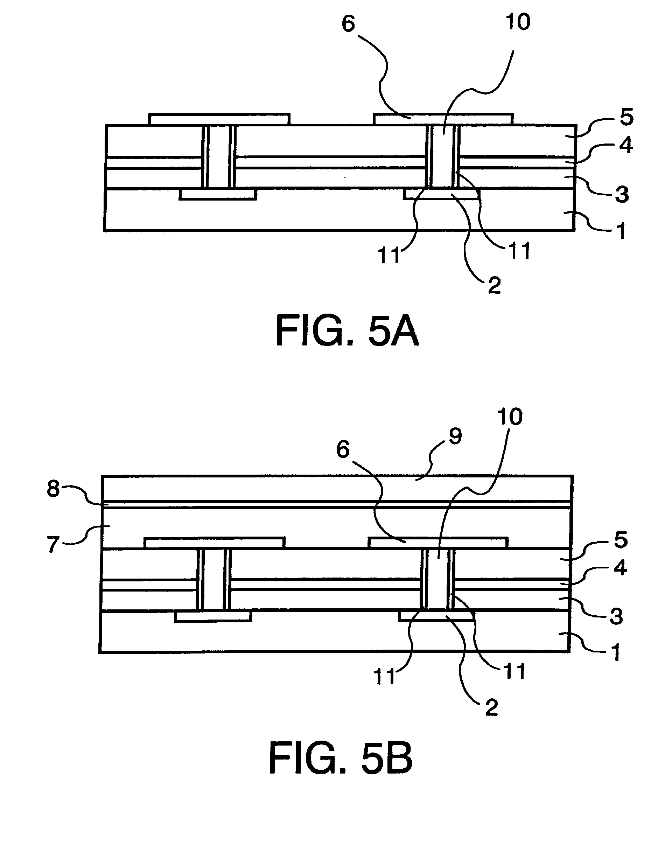

Gemäß Fig. 5Awird danach eine Schicht aus einem reflektierenden Metall abgeschieden und diese mittels Ätzens zu Pixelelektroden 6 strukturiert. Die Strukturierung der Schicht aus reflektierendem Metall erfolgt derart, dass anschließend jede Pixelelektrode 6 über ein Kontaktloch 10 mit einem Transistor 2 verbunden ist. Anschließend wird eine Flüssigkristalleinheit 7 sowie eine Frontplatte 9, welche eine transparente Deckelektrode 8 aufweist, aufgebracht (Fig. 5B).

Soll die lichtreflektierende Schicht 4 an manchen Stellen mit einem Transistor 2 verbunden sein, kann es bevorzugt sein, dass vor Abscheidung der lichtreflektierenden Schicht 4 wenigstens ein Transistor 2, durch Entfernung eines kleinen Teils der ersten isolierenden Schicht 3, freigeätzt wird.

Im folgenden werden Ausführungsformen der Erfindung erläutert, die beispielhafte Realisierungsmöglichkeiten darstellen.

### Ausführungsbeispiel 1

Auf einem halbleitenden Substrat 1 aus p-dotierten Silicium wurden Transistor-Arrays aus n-Kanal-Transistoren 2 und Steuerungsschaltkreise aufgebracht. Auf dem halbleitenden Substrat 1 befinden sich eine erste isolierende Schicht 3 aus SiO₂, eine lichtreflektierende Schicht 4 aus Al und eine zweite isolierende Schicht 5 aus SiO₂. Auf der zweiten isolierenden Schicht 5 sind Pixelelektroden 6 aus Al dotiert mit 4 % Cu aufgebracht. Auf den Pixelelektroden 6 befindet sich eine Flüssigkristalleinheit 7 mit einem TN-Flüssigkristallmaterial. Auf der Flüssigkristalleinheit 7 ist eine Deckelektrode 8 aus ITO und darauf eine Frontplatte 9 aus Glas aufgebracht. Jede Pixelelektrode 6 ist über ein mit Al gefülltes Kontaktloch 10 mit einem Transistor 2 verbunden. Die Wand jedes Kontaktloches 10 ist mit einer 100 nm dicken Schicht aus SiO₂ bedeckt.

Drei derartige Flüssigkristall-Lichtmodulatoren wurden zum Bau einer Farb-Projektionseinrichtung verwendet, welche ein verbessertes Bild aufwies.

### Ausführungsbeispiel 2

Zur Herstellung eines Flüssigkristall-Lichtmodulators wurde auf einem halbleitenden Substrat 1, welches p-dotiertes Silicium enthielt, eine erste isolierende Schicht 3 aus Si₃N₄ abgeschieden. Auf dem halbleitenden Substrat 1 befanden sich Transistor-Arrays und Steuerungsschaltkreise. Mittels Plasmaätzens wurden in regelmäßigen Abständen einige Transistoren 2 freigelegt. Anschließend wurde eine lichtreflektierende Schicht 4 aus Al und darauf eine zweite isolierende Schicht 5 aus Si₃N₄ abgeschieden. Anschließend wurde an den Stellen, wo später eine Pixelelektrode 6 mit einem Transistor 2 verbunden werden sollte, ein zylindrisches Loch 12 mittels Plasmaätzens durch die zweite isdiecende Schicht 5, die lichtreflektierende Schicht 4 und die erste isolierende Schicht 3 geschaffen. Im nächsten Schritt wurde eine 100 nm dicke dritte isolierende Schicht 11 aus Si₃N₄ auf die zweite isolierende Schicht 5 und auf die Wand sowie den Boden des zylindrischen Loches 12 abgeschieden. Mittels Sputterns wurden die Bereiche der dritten isolierenden Schicht 11, welche auf der zweiten isolierenden Schicht 5 und auf dem Boden des zylindrischen Loches 12 waren, weggeätzt. Die dritte isolierende Schicht 11 an der Wand des zylindrischen Loches 12 diente dabei als natürliche Maske für den Ätzprozess. Anschließend wurde eine Schicht 13 aus Al über die Fläche der zweiten isolierenden Schicht 5 und in das zylindrische Loch 12 abgeschieden. Anschließend wurde das Al auf der zweiten isolierenden Schicht 5 entfernt und eine planare Oberfläche geschaffen. Danach wurde eine Schicht aus Al dotiert mit 4 % Cu abgeschieden und diese mittels Plasmaätzens zu Pixelelektroden 6 strukturiert. Die Strukturierung dieser Schicht aus reflektierendem Metall erfolgt derart, dass anschließend jede Pixelelektrode 6 über ein Kontaktloch 10 mit einem Transistor 2 verbunden war. Anschließend wurde eine Flüssigkristalleinheit 7 mit einem TN-Flüssigkristallmaterial sowie eine Frontplatte 9, welche eine transparente Deckelektrode 8 aus ITO aufwies, aufgebracht.

Drei derartige Flüssigkristall-Lichtmodulatoren wurden zum Bau einer Farb-Projektionseinrichtung wmendet, welche ein verbessertes Bild aufwies.

## Patentansprüche

1. Projektionseinrichtung ausgerüstet mit einem Flüssigkristall-Lichtmodulator, der ein halbleitendes Substrat (1), auf dem Transistor-Arrays und Steuerungsschaltkreise aufgebracht sind, auf dem Substrat (1) aufgebracht eine erste isolierende Schicht (3), eine lichtreflektierende Schicht (4), eine zweite isolierende Schicht (5), mindestens zwei Pixelelektroden (6), eine Flüssigkristallschicht (7), eine Deckelektrode (8) und eine Frontplatte (9) umfasst, wobei jede Pixelelektrode (6) durch ein Kontaktloch (10), welches mit einem elektrisch leitenden Material gefüllt ist, mit einem Transistor (2) verbunden ist und wobei die Wand des Kontaktlochs (10) durchgehend mit einer dritten isolierenden Schicht (11) bedeckt ist.

2. Projektionseinrichtung nach Anspruch 1,
wobei
die dritte isolierende Schicht (11) eine Schichtdicke zwischen 100 und 500 nm aufweist.

3. Projektionseinrichtung nach Anspruch 1,
wobei
die lichtreflektierende Schicht (4) mindestens einen elektrischem Kontakt mit einem Transistor (2) hat.

4. Flüssigkristall-Lichtmodulator, der ein halbleitendes Substrat (1), auf dem Transistor-Arrays und Steuerungsschaltkreise aufgebracht sind, auf dem Substrat (1) aufgebracht eine erste isolierende Schicht (3), eine lichtreflektierende Schicht (4), eine zweite isolierende Schicht (5), mindestens zwei Pixelelektroden (6), eine Flüssigkristallschicht (7), eine Deckelektrode (8) und eine Frontplatte (9) umfasst, wobei jede Pixelelektrode (6) durch ein Kontaktloch (10), welches mit einem elektrisch leitenden Material gefüllt ist, mit einem Transistor (2) verbunden ist und wobei die Wand des Kontaktlochs (10) durchgehend mit einer dritten isolierenden Schicht (11) bedeckt ist.

5. Verfahren zur Herstellung eines Flüssigkristall-Lichtmodulator, der ein halbleitendes Substrat (1), auf dem Transistor-Arrays und Steuerungsschaltkreise aufgebracht sind, auf dem Substrat (1) aufgebracht eine erste isolierende Schicht (3), eine lichtreflektierende Schicht (4), eine zweite isolierende Schicht (5), mindestens zwei Pixelelektroden (6), eine Flüssigkristallschicht (7), eine Deckelektrode (8) und eine Frontplatte (9) umfasst, wobei jede Pixelelektrode (6) durch ein Kontaktloch (10), welches mit einem elektrisch leitenden Material gefüllt ist, mit einem Transistor (2) verbunden ist,
**dadurch gekennzeichnet,**
**dass** die Wand des Kontaktlochs (10) durchgehend mit einer dritten isolierenden Schicht (11) bedeckt wird.

6. Verfahren nach Anspruch 5,
wobei
die dritte isolierende Schicht (11) auf die Wand des Kontaktloches (10) aufgebracht wird, indem die dritte isolierende Schicht (11) auf die zweite isolierende Schicht (5) und auf die Wand sowie den Boden des Kontaktloches (10) abgeschieden wird und die Bereiche der dritten isolierenden Schicht (11), welche sich auf der zweiten isolierenden Schicht (5) und auf dem Boden des Kontaktloches (10) befinden, weggeätzt werden, wobei die dritte isolierende Schicht (11) an der Wand des Kontaktloches (10) als Maske dient.

7. Verfahren nach Anspruch 5,
wobei
vor Abscheidung der lichtreflektierenden Schicht (4) wenigstens ein Transistor (2) freigeätzt wird.

## Claims

1. A projection device fitted with a liquid crystal light modulator which comprises a semiconducting substrate (1) on which transistor arrays and control circuits are provided, a first insulating layer (3) provided on the substrate (1), a light-reflecting layer (4), a second insulating layer (5), at least two pixel electrodes (6), a liquid crystal layer (7), a cover electrode (8), and a front plate (9), wherein each pixel electrode (6) is connected to a transistor (2) through a contact hole (10) which is filled with an electrically conducting material, and wherein the wall of the contact hole (10) is fully covered with a third insulating layer (11).

2. A projection device as claimed in claim 1, wherein the third insulating layer (11) has a layer thickness of between 100 nm and 500 nm.

3. A projection device as claimed in claim 1, wherein the light-reflecting layer (4) has at least one electrical contact to a transistor (2).

4. A liquid crystal light modulator which comprises a semiconducting substrate (1) on which transistor arrays and control circuits are provided, a first insulating layer (3) provided on the substrate (1), a light-reflecting layer (4), a second insulating layer (5), at least two pixel electrodes (6), a liquid crystal layer (7), a cover electrode (8), and a front plate (9), wherein each pixel electrode (6) is connected to a transistor (2) through a contact hole (10) which is filled with an electrically conducting material, and wherein the wall of the contact hole (10) is fully covered with a third insulating layer (11).

5. A method of manufacturing a liquid crystal light modulator which comprises a semiconducting substrate (1) on which transistor arrays and control circuits are provided, a first insulating layer (3) provided on the substrate (1), a light-reflecting layer (4), a second insulating layer (5), at least two pixel electrodes (6), a liquid crystal layer (7), a cover electrode (8), and a front plate (9), wherein each pixel electrode (6) is connected to a transistor (2) through a contact hole (10) which is filled with an electrically conducting material, **characterized in that** the wall of the contact hole (10) is fully covered with a third insulating layer (11).

6. A method as claimed in claim 5, wherein the third insulating layer (11) is provided on the wall of the contact hole (10) through deposition of the third insulating layer (11) on the second insulating layer (5) and on the wall as well as on the bottom of the contact hole (10), and in that those regions of the third insulating layer (11) which lie on the second insulating layer (5) and on the bottom of the contact hole (10) are etched away, for which the third insulating layer (11) on the wall of the contact hole (10) serves as a mask.

7. A method as claimed in claim 5, wherein at least one transistor (2) is exposed through etching before the light-reflecting layer (4) is deposited.

## Revendications

1. Dispositif de projection équipé d'un modulateur optique à cristaux liquides qui comprend un substrat semi-conducteur (1) sur lequel sont appliqués des arrays de transistors et des circuits de commande puis, appliquées sur le substrat (1), une première couche isolante (3), une couche réfléchissant la lumière (4), une deuxième couche isolante (5), au moins deux électrodes de pixel (6), une couche à cristaux liquides (7), une électrode chapeau (8) et une plaque frontale (9), chaque électrode de pixel (6) étant reliée à un transistor (2) par un trou de contact (10) qui est rempli d'un matériau électriquement conducteur et la paroi du trou de contact (1à) étant recouverte en continu par une troisième couche isolante (11).

2. Dispositif de projection selon la revendication 1, dans lequel la troisième couche isolante (11) présente une épaisseur de couche située entre 100 et 500 nm.

3. Dispositif de projection selon la revendication 1, dans lequel la couche réfléchissant la lumière (4) a au moins un contact électrique avec un transistor (2).

4. Modulateur optique à cristaux liquides qui comprend un substrat semi-conducteur (1) sur lequel sont appliqués des arrays de transistors et des circuits de commande puis, appliquées sur le substrat (1), une première couche isolante (3), une couche réfléchissant la lumière (4), une deuxième couche isolante (5), au moins deux électrodes de pixel (6), une couche à cristaux liquides (7), une électrode chapeau (8) et une plaque frontale (9), chaque électrode de pixel (6) étant reliée à un transistor (2) par un trou de contact (10) qui est rempli d'un matériau électriquement conducteur et la paroi du trou de contact (1à) étant recouverte en continu par une troisième couche isolante (11).

5. Procédé de fabrication d'un modulateur optique à cristaux liquides qui comprend un substrat semi-conducteur (1) sur lequel sont appliqués des arrays de transistors et des circuits de commande puis, appliquées sur le substrat (1), une première couche isolante (3), une couche réfléchissant la lumière (4), une deuxième couche isolante (5), au moins deux électrodes de pixel (6), une couche à cristaux liquides (7), une électrode chapeau (8) et une plaque frontale (9), chaque électrode de pixel (6) étant reliée à un transistor (2) par un trou de contact (10) qui est rempli d'un matériau électriquement conducteur
**caractérisé en ce que** la paroi du trou de contact (10) est recouverte en continu par une troisième couche isolante (11).

6. Procédé selon la revendication 5 **caractérisé en ce que** la troisième couche isolante (11) est appliquée sur la paroi du trou de contact (10) en déposant la troisième couche isolante (11) sur la deuxième couche isolante (5) et sur les parois et le fond du trou de contact (10) et en gravant les zones de la troisième couche isolante (11) qui se trouvent sur la deuxième couche isolante (5) et sur le fond du trou de contact (10), la troisième couche isolante (11) servant de masque sur les parois du trou de contact (10).

7. Procédé selon la revendication 5, dans lequel au moins un transistor (2) est gravé avant le dépôt de la couche réfléchissant la lumière (4).
